# EUROPEAN PATENT APPLICATION

(11) **EP 4 628 423 A1**
(43) Date of publication of application: **08.10.2025**
(21) Application number: 23897833.2
(22) Date of filing: 29.11.2023
(51) Int. Cl.: B65D 77/04, B65D 81/26

(54) **CONTAINER FOR STORING ADDITION-CURING LIQUID SILICONE COMPOSITION**

(30) Priority: 30.11.2022 JP 2022190866
(71) Applicant: SHIN-ETSU CHEMICAL CO., LTD., Tokyo 1000005 (JP)
(72) Inventor: HARA, Hiroyasu, Annaka-shi Gunma 379-0224 (JP); YUASA, Shiho, Annaka-shi Gunma 379-0224 (JP)
(74) Representative: Mewburn Ellis LLP
(86) International application number: PCT/JP2023/042752
(87) International publication number: WO 2024/117187

(57) **Abstract**

This container stores an addition-curing liquid silicone composition that contains a platinum catalyst that is activated by contact with the atmosphere, but is inactive in an atmosphere having a humidity of 5% RH or less and an oxygen concentration of 0.1 volume% or less. In the presence of this platinum catalyst that has undergone activation in the atmosphere, the addition-curing liquid silicone composition undergoes crosslinking and curing by a hydrosilylation addition reaction. The container has this addition-curing liquid silicone composition sealed (filled) thereinto, and the container comprises: a first sealing structure having a sealing part provided by sealing an inlet opening through which the addition-curing liquid silicone composition is introduced; a second sealing structure, that is a film that covers at least the entire sealing part of the first sealing structure or covers the entire first sealing structure, to further seal the sealing part; and a member having the ability to consume and remove the oxygen and moisture incidentally present between the first sealing structure and the second sealing structure. The storability of an aerobically curable addition-curing liquid silicone composition can thereby be improved.

## Description

### TECHNICAL FIELD

This invention relates to a container for storing a curable liquid silicone composition, specifically curable liquid silicone rubber composition or curable liquid silicone gel composition, comprising an aerobic platinum catalyst mixture which is activated as a hydrosilation addition reaction catalyst upon contact with airborne water (moisture) and/or oxygen, the composition being curable into a silicone rubber cured product (silicone elastomer) or silicone gel cured product.

### BACKGROUND ART

In response to the demand for energy saving and sustainable development goals (SDGs), the requirement for liquid silicone compositions to cure without heating becomes stronger in these years. Also, one-pack type materials are preferred for the purposes of simplifying the use of materials and avoiding any mistake in the service stage.

Of curable liquid silicone compositions, one-pack compositions of crosslinking reaction type capable of curing without heating include those of condensation reaction, UV-induced radical reaction, and addition reaction types. Some of these compositions have an extremely shortened storage period and some compositions can be cured by activating the catalyst with UV. However, all these compositions are insufficient in deep-section cure or UV-dark-section cure (section non-accessible to UV), with their applicable field being limited. When UV irradiation is involved, a vast amount of electric energy is necessary.

Among the techniques of curing silicone compositions into rubber or gel via crosslinking reaction utilizing a platinum catalyst for addition reaction, the technique aiming to ensure one-pack storage stability of unreacted compositions, to acquire a pot life, and to cure at lower temperature is known from the following prior art documents: Patent Documents 1 to 6 (USP 3,989,666, USP 3,989,667, USP 4,510,094, JP-A H09-143373, JP-A H06-192576, and JP-A H09-141107). All these compositions failed to clear both the level of closed state one-pack storage stability that ensures commercial marketing and distribution and the ability to cure at room temperature (RT) after seal opening.

In contrast, Patent Document 7 (WO 2022/270366) proposes an addition-curable liquid silicone composition of one-pack and aerobic cure type which maintains a liquid state in a closed container which has been substantially deoxygenated and dehydrated, but can react and cure upon contact with air after opening the seal of the container.

### PRIOR ART DOCUMENTS

### PATENT DOCUMENTS

Patent Document 1: USP 3,989,666
Patent Document 2: USP 3,989,667
Patent Document 3: USP 4,510,094
Patent Document 4: JP-A H09-143373
Patent Document 5: JP-A H06-192576
Patent Document 6: JP-A H09-141107
Patent Document 7: WO 2022/270366

### SUMMARY OF INVENTION

### TECHNICAL PROBLEM

When it is desired to consistently distribute the addition-curable liquid silicone composition of one-pack and aerobic cure type in the market, the storage and transportation of the composition must be carried out in a complete oxygen and water barrier state. Since prior art containers fail to completely shut off oxygen and water entrained from the container material itself or entering through the container lid, the storage of the contents (addition-curable liquid silicone composition of aerobic cure type) is sometimes insufficient.

An object of the invention, which has been made under the above-mentioned circumstances, is to provide a container for storing an addition-curable liquid silicone composition of one-pack and aerobic cure type, the container being adapted to improve the storage stability of the composition.

### SOLUTION TO PROBLEM

Making extensive investigations to attain the above object, the inventors have found that when a container for storing an addition-curable liquid silicone composition of aerobic cure type has an inlet through which the composition is injected, and comprises a first sealing structure having a sealing section constructed by sealing the inlet, and a second sealing structure which further seals the sealing section, wherein the space or gap between the first and second sealing structures is provided with a function of removing oxygen and water, the storage stability of the aerobic cure liquid silicone composition within the first sealing structure, especially addition-curable liquid silicone composition containing an aerobic platinum catalyst is considerably improved.

Accordingly, the invention provides a container (or package embodiment) for storing an addition-curable liquid silicone composition as defined below.
[1] A container for storing an addition-curable liquid silicone composition comprising a platinum catalyst which remains inactive in an atmosphere having a humidity of up to 5% RH and an oxygen concentration of up to 0.1% by volume, but is activated upon contact with air, the composition being adapted to crosslink and cure through hydrosilation addition reaction in the presence of the platinum catalyst which has been activated in air,
   the container having an inlet through which the composition is injected so that the composition is sealably contained in the container, the container comprising
   a first sealing structure having a sealing section constructed by sealing the inlet,
   a second sealing structure in the form of a film which covers at least the entire sealing section of the first sealing structure or the entire first sealing structure to further seal the sealing section, and
   a member having a function of consuming and removing oxygen and water, disposed between the first and second sealing structures.
[2] The container of [1] wherein the addition-curable liquid silicone composition comprises components (A) to (C):
   (A) a diorganopolysiloxane having at least one alkenyl group per molecule,
   (B) an organohydrogenpolysiloxane having at least two silicon-bonded hydrogen atoms per molecule, in an amount to provide 0.5 to 4 moles of silicon-bonded hydrogen in component (B) per mole of alkenyl group in component (A), and
   (C) a platinum catalyst mixture which is activated with oxygen and/or water, in an amount to provide 0.1 to 1,000 ppm by weight of platinum atom in component (C) based on the total weight of components (A) and (B).
[3] The container of [2] wherein the platinum catalyst mixture is an aerobic platinum catalyst mixture in the form of a reaction mixture of a platinum/alkenyl-containing organosiloxane complex and an organosilicon compound having at least one silicon-bonded hydrogen atom (SiH group) per molecule, in an amount to provide a molar excess of SiH group relative to the alkenyl group in the platinum/alkenyl-containing organosiloxane complex.
[4] The container of [3] wherein the platinum/alkenyl-containing organosiloxane complex is a complex of platinum, platinum chloride, chloroplatinic acid or chloroplatinic acid salt with a vinyl-containing siloxane.
[5] The container of [4] wherein the vinyl-containing siloxane is 1,3-divinyl-1,1,3,3-tetramethyldisiloxane.
[6] The container of any one of [3] to [5] wherein the organosilicon compound having at least one silicon-bonded hydrogen atom is an organohydrogensilane or organohydrogensiloxane oligomer.
[7] The container of any one of [3] to [6] wherein the organosilicon compound having at least one silicon-bonded hydrogen atom is at least one compound selected from among a trialkoxy(hydrogen)silane, alkyldialkoxy(hydrogen)silane, dialkylalkoxy(hydrogen)silane, 1,1,1,3,3-pentamethyldisiloxane, 1,1,3,3-tetramethyldisiloxane, 1,1,1,3,5,5,5-heptamethyltrisiloxane, 1,1,3,3,5,5-hexamethyltrisiloxane, 1,1,1,3,5,7,7,7-octamethyltetrasiloxane, 1,3,5,7-tetramethylcyclotetrasiloxane, and 1,3,5,7,9-pentamethylcyclopentasiloxane.
[8] The container any one of [3] to [7] wherein the organosilicon compound having at least one silicon-bonded hydrogen atom is an organohydrogensiloxane oligomer having at least two hydrogen atoms bonded to silicon atoms which adjoin each other via an oxygen atom to form a siloxane linkage (Si-O-Si), i.e., at least two SiH groups per molecule.
[9] The container of any one of [1] to [8] wherein the first sealing structure is a container made of a metal, glass, ceramic or resin, and the sealing section is constructed by inserting, engaging or screwing a lid made of a metal, glass, ceramic or resin into the inlet through which the composition is injected or by bonding or fusing the inlet itself to close the inlet.
[10] The container of any one of [1] to [9] wherein the second sealing structure is made of a resin film.
[11] The container of any one of [1] to [9] wherein the second sealing structure is a multilayered film composed of a resin layer and a metal layer or a multilayered film composed of a metal foil and a metal layer.
[12] The container of any one of [1] to [11] wherein the second sealing structure which covers at least the entire sealing section of the first sealing structure is heat fused or bonded to the first sealing structure disposed at the outer periphery of the sealing section to further seal the sealing section.
[13] The container of any one of [1] to [11] wherein the second sealing structure which covers the entire first sealing structure is itself closed by heat fusion or bonding to further seal the sealing section.
[14] The container of any one of [1] to [13] wherein the member having a function of consuming and removing oxygen and water is a dehydrating/deoxygenating agent or a mixture of a dehydrating agent and a deoxygenating agent
[15] The container of any one of [1] to [14] wherein the member having a function of consuming and removing oxygen and water is disposed in the space between the first and second sealing structures.
[16] The container of any one of [1] to [15] wherein the member having a function of consuming and removing oxygen and water is rested on the sealing section of the first sealing structure.
[17] The container of any one of [1] to [16] wherein the member's function of consuming and removing oxygen and water is to chemically react with oxygen and water in the space where the member is present to absorb oxygen and water.

### ADVANTAGEOUS EFFECTS OF INVENTION

In conjunction with the aerobic curable liquid silicone composition, especially of one-pack type, comprising a platinum catalyst mixture which is activated as a hydrosilation addition reaction catalyst upon contact with airborne water (moisture) and/or oxygen, that is, the material having sufficient "long-term one-pack storage stability in a closed container" to store and transport the material at refrigeration temperature to room temperature and on use of the material, "the aerobic platinum catalyst mixture in the composition is activated so that hydrosilation addition reaction takes place whereby the material cures not only at the air-contacting surface, but also rapidly to a deep section" under unheated open conditions (i.e., upon contact with airborne water (moisture) and/or oxygen at room temperature), the storage container of the invention is effective for improving the storage stability of the composition, prolonging the storage duration of the composition, increasing the flexibility of transportation of the composition, and contributes to the supply of various parts and articles complying with the energy saving and SDGs.

### BRIEF DESCRIPTION OF DRAWINGS

[FIG. 1] FIG. 1 schematically shows the construction of a tank as the first embodiment of the addition-curable liquid silicone composition-storing container according to the invention; FIG. 1(a) is a schematic view of the overall tank, and FIG. 1(b) is a cross-sectional view of an essential portion of the first embodiment.
[FIG. 2] FIG. 2 is a schematic cross-sectional view of a cartridge as the second embodiment of the addition-curable liquid silicone composition-storing container of the invention.
[FIG. 3] FIG. 3 schematically shows the construction of a package (1) as the third embodiment of the addition-curable liquid silicone composition-storing container according to the invention; FIG. 3(a) shows the construction of the package before it is closed or sealed with the second sealing structure, and FIG. 3(b) shows the construction of the package after it is closed or sealed with the second sealing structure.
[FIG. 4] FIG. 4 schematically shows the construction of a package (2) as the fourth embodiment of the addition-curable liquid silicone composition-storing container according to the invention.

### DESCRIPTION OF EMBODIMENTS

As used herein, the term "aerobic" refers to the property (of aerobic reaction type) of the catalyst (especially platinum catalyst) which remains low in the catalytic activity as a hydrosilation addition reaction catalyst in a closed state having a low oxygen concentration (substantially oxygen-free) and a low water content where any contact with water (moisture) and oxygen is shut off, but is activated as a hydrosilation addition reaction catalyst upon contact with airborne water (moisture) and/or oxygen; and "aerobic cure" refers to the property of the addition-curable liquid silicone composition that hydrosilation addition reaction by the aerobic catalyst does not take place (cure does not take place) in a closed state having a low oxygen concentration and a low water content where any contact with water (moisture) and oxygen is shut off, but hydrosilation addition reaction is promoted (cure takes place) in contact with ambient air. Also, the "closed state" means that any contact with ambient air is shut off (i.e., any contact with water (moisture) and oxygen is shut off), and the closed container means a container capable of establishing the closed state. As used herein, "air" assumes an oxygen concentration of 21% by volume and a humidity of more than 5% RH to 100% RH. The low oxygen concentration of the closed state indicates an oxygen concentration of up to 0.1% by volume and the low water content indicates a humidity of up to 5% RH.

The addition-curable liquid silicone composition that the invention intends to store is an addition-curable liquid silicone composition comprising a platinum catalyst which remains inactive in an atmosphere having a humidity of up to 5% RH and an oxygen concentration of up to 0.1% by volume, but is activated upon contact with air, which composition crosslinks and cures through hydrosilation addition reaction in the presence of the platinum catalyst which has been activated in air, that is, an addition-curable liquid silicone composition of so-called aerobic cure type, preferably a composition as disclosed in Patent Document 7. The platinum catalyst remains low active in a closed state having a low oxygen concentration and a low water content where any contact with ambient air is shut off so that the composition remains liquid without curing. When the composition is opened to ambient air, the platinum catalyst is activated with airborne oxygen and/or water so that the composition rapidly crosslinks and cures through hydrosilation addition reaction into a desired cured product (silicone rubber cured product or silicone gel cured product).

When the addition-curable liquid silicone composition of aerobic cure type is distributed and marketed, the prior art package form (storage container) fails to prevent entry of oxygen and water from ambient air, suggesting that some products have poor storage stability. A condensation curable silicone composition which reacts and cures with airborne water is known as a similar curable silicone composition. In this case, there are a variety of means for preventing entry of water from ambient air for improving the storage stability of the condensation curable silicone composition. Since the curability of the condensation curable silicone composition is not affected by oxygen, the prevention of oxygen entry is not considered as the means for improving storage stability. These means are unsatisfactory as the means for packaging the addition-curable liquid silicone composition of aerobic cure type to which the invention relates.

The inventors made intensive studies to solve the outstanding problems.

For the reasonable manufacture of addition-curable liquid silicone compositions of aerobic cure type, a composition as prepared must be quickly filled in a packaging container and sealably contained therein. At this point of time, a lid is inserted, engaged or screwed into the inlet of the container through which the addition-curable liquid silicone composition is injected or the inlet itself is sealed by bonding or heat fusion so that the packaging container may be quickly closed. The material and structure of the portion thus sealed (sealing section), especially the structure in which the lid is inserted, engaged or screwed into the inlet fails to completely prevent the entry of oxygen or water through the sealing section from the ambient air.

Then, by using the packaging container as a first sealing structure, covering at least the entire sealing section of the first sealing structure or the entire first sealing structure with a second sealing structure in the form of a film, and providing a member having a function of consuming and removing oxygen and water (oxygen and water removing mechanism) in the space or gap between the first and second sealing structures, the entry of oxygen and water from ambient air into the addition-curable liquid silicone composition in the container can be controlled substantially zero. By this discovery, the addition-curable liquid silicone composition-storing container is completed.

### <Addition-curable liquid silicone composition-storing container>

The addition-curable liquid silicone composition-storing container of the invention is a container for storing an addition-curable liquid silicone composition comprising a platinum catalyst which remains inactive in an atmosphere having a humidity of up to 5% RH and an oxygen concentration of up to 0.1% by volume, but is activated upon contact with air, the composition being adapted to crosslink and cure through hydrosilation addition reaction in the presence of the platinum catalyst which has been activated in air,
the container having an inlet through which the composition is injected so that the composition is sealably contained in the container, the container comprising
(1) a first sealing structure having a sealing section constructed by sealing the inlet,
(2) a second sealing structure in the form of a film which covers at least the entire sealing section of the first sealing structure or the entire first sealing structure to further seal the sealing section, and
(3) a member having a function of consuming and removing oxygen and water, disposed between the first and second sealing structures.

The first sealing structure is a container in which the addition-curable liquid silicone composition is sealably contained, preferably a container made of metal, glass, ceramic or resin material. Examples of the metal of which the first sealing structure is made include aluminum, iron and stainless steel; alumina is exemplary of the ceramic; and examples of the resin include synthetic resins such as polyethylene (PE), polypropylene, polyethylene terephthalate, and polyvinyl chloride. The first sealing structure has a thickness enough to provide the strength as the first sealing structure and prevent transmission of ambient air, i.e., oxygen and water.

The form of the first sealing structure as container may be selected from tank, bottle, tube and cartridge in accordance with the physical properties (viscosity and the like) and application (utility) of the addition-curable liquid silicone composition contained therein.

The first sealing structure has a sealing section which is constructed by sealing the inlet through which the addition-curable liquid silicone composition has been injected. Namely, the container serving as the first sealing structure is provided with an inlet for injecting the addition-curable liquid silicone composition. The addition-curable liquid silicone composition is injected through the inlet. After the container as the first sealing structure is charged with the composition, the inlet is sealed to form a sealing section.

The sealing section is preferably constructed by inserting, engaging or screwing a lid made of metal, glass, ceramic or resin material into the inlet through which the addition-curable liquid silicone composition has been injected, or by bonding or fusing (heat fusing) the inlet itself, to seal the inlet. The material of the lid may be the same as the material of the first sealing structure. Examples of the metal of which the lid is made include aluminum, iron and stainless steel; alumina is exemplary of the ceramic; and examples of the resin include synthetic resins such as polyethylene (PE), polypropylene, polyethylene terephthalate, and polyvinyl chloride.

The first sealing structure may also be an addition-curable liquid silicone composition-storing container as used in the prior art.

The second sealing structure is a film which covers at least the entire sealing section of the first sealing structure or the entire first sealing structure to further seal the sealing section. The film which covers at least the entire sealing section of the first sealing structure refers to the package form in which the second sealing structure covers the entire sealing section of the first sealing structure to further seal the sealing section and may also cover the peripheral portion thereof.

The second sealing structure is preferably made of a resin film, preferably a multilayered film of resin layer and metal layer or a multilayered film of metal foil and metal layer. Inter alia, the multilayered film of resin layer (or film) and metal layer (or foil) is preferred because it meets all the strength, flexibility and low transmittance of film. The multilayered film whose metal layer (or foil) is the outer surface is more preferred as the second sealing structure.

Preferred examples of the resin of which the film as the second sealing structure is made include synthetic resins such as polyethylene (PE), polypropylene, polyethylene terephthalate, and polyvinyl chloride. The metal of which the metal layer or foil is made is preferably aluminum.

The second sealing structure has a thickness enough to ensure the strength as the second sealing structure and prevent the transmission of ambient air, i.e., oxygen and water as completely as possible. For example, the resin film preferably has a thickness of 10 to 1,000 µm. In the case of multilayered film, the resin layer or metal foil serving as a substrate preferably has a thickness of 10 to 1,000 µm and the overlying metal layer preferably has a thickness of 5 to 50 µm.

The method of further sealing the first sealing structure with the second sealing structure includes fixedly securing the second sealing structure of film shape to the outer periphery of the sealing section of the first sealing structure with an adhesive or by heat fusion, and sealing the opening of the second sealing structure by heat fusion after the first sealing structure is entirely enclosed in the interior of the second sealing structure of bag shape. That is, in the setting wherein the second sealing structure covers at least the entire sealing section of the first sealing structure, the second sealing structure is preferably heat fused or bonded to the first sealing structure at the outer periphery of the sealing section to further seal the sealing section. Alternatively, in the setting wherein the second sealing structure covers the entire first sealing structure, the second sealing structure itself is preferably sealed by heat fusion or bonding, to further seal the sealing section.

In the addition-curable liquid silicone composition-storing container wherein the addition-curable liquid silicone composition is double sealed in the first sealing structure, the member having a function of consuming and removing oxygen and water is disposed between the first and second sealing structures. The member having a function of consuming and removing oxygen and water is preferably a member which chemically reacts with oxygen and water in the space where the member is present, for absorbing oxygen and water. Now that the content of oxygen and water in the space or gap between the first and second sealing structures is reduced by the member, the entry of oxygen and water into the first sealing structure is prevented.

In the preferred embodiment, a gap is defined between the first and second sealing structures, and the member having a function of consuming and removing oxygen and water is disposed in the gap. More preferably, the member having a function of consuming and removing oxygen and water is placed on the sealing section of the first sealing structure. Alternatively, the member having a function of consuming and removing oxygen and water may be fixedly secured to the sealing section of the first sealing structure.

For the member having a function of consuming and removing oxygen and water, the function of consuming and removing oxygen and water is preferably a function of chemically reacting with oxygen and water in the space where the member is present, for absorbing oxygen and water. That is, for efficient absorption of oxygen and water in the space or gap between the first and second sealing structures, it is preferred from the aspects of cost and performance that the member having a function of consuming and removing oxygen and water be a member made of a so-called irreversible dehydrating/deoxygenating agent, for example, a metallic iron powder utilizing chemical reaction that it is oxidized with oxygen and water into ferrous oxide or ferric oxide, or calcium oxide utilizing exothermic reaction with oxygen or reaction with water to form calcium hydroxide. Plural members for absorbing oxygen and water separately may also be used, for example, a combination of dehydrating agent and deoxygenating agent.

As the member having a function of consuming and removing oxygen and water, commercially available products may also be used. Examples of the dehydrating/deoxygenating agent include RP system series products such as RP system RP-1AN, RP-3AN, RP-5AN and RP-10AN (Mitsubishi Gas Chemical Co., Ltd.). Examples of the combination of dehydrating agent and deoxygenating agent include combinations of a dehydrating agent or descicant, Ageless Dry ADN series such as AND-5 (Mitsubishi Gas Chemical Co., Ltd.) with an iron-based deoxygenating agent of spontaneous reaction type, Ageless Type S (Mitsubishi Gas Chemical Co., Ltd.). The member having a function of consuming and removing oxygen and water may be any of the dehydrating/deoxygenating agents or the dehydrating agent and deoxygenating agent packed so as not to impair their function.

The amount of the member having a function of consuming and removing oxygen and water, that is, the amount of dehydrating/deoxygenating agent or the amount of dehydrating agent and deoxygenating agent in combination may be set as appropriate as long as the amount is necessary to absorb oxygen and water in the space or gap between the first and second sealing structures.

In the addition-curable liquid silicone composition-storing container, during storage, the sealing section is formed by sealing the opening of the first sealing structure, and the first sealing structure is further sealed with the second sealing structure, for preventing ambient air (i.e., oxygen and water) from entering the sealing section. In addition, the member having a function of consuming and removing oxygen and water disposed in the space between the first and second sealing structures functions to remove oxygen and water in the narrow space or gap between the sealing section and the second sealing structure for further preventing oxygen and water from entering the sealing section. Thus, the addition-curable liquid silicone composition of aerobic cure type is further improved in storage stability and retention, and the flexibility of transportation is enhanced.

Now the invention is described in detail with reference to the drawings.

### (Tank)

The invention provides a tank or metal-make closed container used for storing and transporting an addition-curable liquid silicone composition.

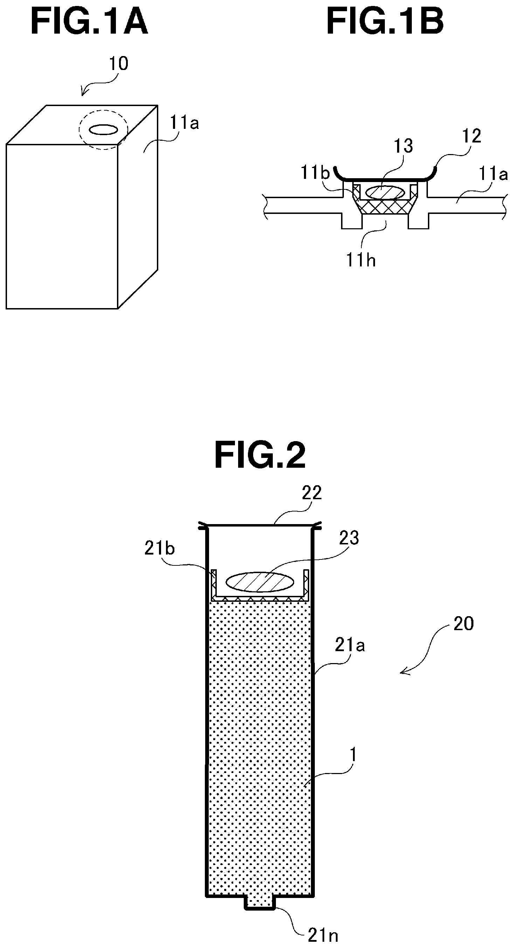

FIG. 1 shows the construction of a tank according to a first embodiment of the addition-curable liquid silicone composition-storing container of the invention. FIG. 1(a) is a schematic view of the overall tank. FIG. 1(b) is a cross-sectional view of an essential portion of the first embodiment.

The tank 10 which is the addition-curable liquid silicone composition-storing container of the invention is composed of a container main body 11a of generally box shape as shown in FIG. 1(a).

FIG. 1(b) shows the cross-sectional construction of a portion encircled by broken line in FIG. 1(a).

The container main body 11a is provided at its top and in the broken line circle with an opening 11h which is an inlet through which the addition-curable liquid silicone composition is injected. After the silicone composition is injected, the opening 11h is sealed by inserting, engaging or screwing a lid 11b therein to define a sealing section. The first sealing structure is constructed by the container main body 11a and lid 11b.

The container main body 11a and lid 11b are preferably made of a metal material such as aluminum, iron or stainless steel.

A sealing film 12 serving as the second sealing structure is a sheet which covers entirely the portion (i.e., the sealing section of the first sealing structure) of the opening 11h (i.e., inlet for injecting the addition-curable liquid silicone composition) of the container main body 11a sealed with the lid 11b to further seal the sealing section. In the tank 10, the sealing section is preferably further sealed by securing the sealing film 12 to the open end of the container main body 11a through heat fusion or bonding such that the opening (inlet) of the container main body 11a is capped. Preferably the space between the portion (i.e., sealing section of the first sealing structure) of the opening 11h of the container main body 11a which is sealed with the lid 11b and the sealing film 12 is deaerated before the sealing film 12 is fixedly secured. The sealing film 12 is preferably a film of synthetic resin such as polyethylene, or a multilayered film composed of a film of synthetic resin such as polyethylene and a metal film or foil such as aluminum.

The member having a function of consuming and removing oxygen and water is depicted as a member 13, which is preferably disposed in the space defined between the portion (sealing section of the first sealing structure) of the opening 11h of container main body 11a sealed with lid 11b and the sealing film 12 and more preferably fixedly secured to the top of the lid 11b.

In the case of tank 10, during storage, the sealing section is formed by sealing the opening 11h of container main body 11a with the lid 11b and further sealed with the sealing film 12 whereby the entry of air (i.e., oxygen and water) into the sealing section is inhibited. In addition, the member 13 disposed between lid 11b and sealing film 12 functions to remove oxygen and water in the narrow space or gap between the sealing section and sealing film 12 whereby the entry of oxygen and water into the sealing section is further inhibited. This further improves the storage and retention of the addition-curable liquid silicone composition of aerobic cure type and renders the transportation thereof more flexible. On use of the addition-curable liquid silicone composition, the composition can be readily taken out by removing the sealing film 12 and member 13 from the tank 10 and opening the lid 11b. The tank 10 can be temporarily sealed by closing the lid 11b.

### (Cartridge)

The invention also provides a cartridge, also referred to as a sealant cartridge. The cartridge serves to store the addition-curable liquid silicone composition in its interior in a sealed manner. It is used in applying, typically sealing work by discharging the composition through the nozzle of a cartridge gun (caulking gun) mounted at the tip of the cartridge container main body.

FIG. 2 is a schematic cross-sectional view of a cartridge according to a second embodiment of the addition-curable liquid silicone composition-storing container of the invention.

A cartridge 20 which is the addition-curable liquid silicone composition-storing container is composed of a container main body 21a to be filled with the silicone composition, a nozzle 21n, a plunger 21b, a sealing film 22 which is the second sealing structure, and a member 23 which is the member having a function of consuming and removing oxygen and water. The first sealing structure is constructed by the container main body 21a, nozzle 21n, and plunger 21b.

The container main body 21a is a cylindrical container which is provided at one end with a nozzle 21n capable of discharging the addition-curable liquid silicone composition 1 and at the other end with an opening which is open to the outside and serves as an inlet for injecting the silicone composition 1. After the silicone composition 1 is injected into the container main body 21a, the plunger 21b is set within the inlet so that the inlet is sealed with the plunger 21b (to complete the sealing section).

The nozzle 21n mounted at the tip of container main body 21a is integral with the container main body 21a during storage of the cartridge 20. On use of the cartridge 20, the nozzle 21n is partially torn off by a knife to form a discharge port so that the silicone composition 1 in the container main body 21a may be discharged through the discharge port in the nozzle 21n to the outside.

The plunger 21b is inserted at one end of the container main body 21a and slidably mounted along the inner wall of the container main body 21a. While at least a portion of the outer surface of plunger 21b is in abutment with the inner surface of the container main body 21a, the plunger 21b is moved along the inner surface of the container main body 21a in a direction toward the nozzle 21n at the other end by the pressing force of the cartridge gun or caulking gun. As a result, the addition-curable liquid silicone composition 1 in the container main body 21a is discharged through the discharge port in the nozzle 21n to the outside under the pressure of plunger 21b. Preferably, the cylindrical inner surface of the container main body 21a is lined with a coating which facilitates movement of the plunger 21b in sliding contact with the inner surface and prevents the entry of air from the outside between the cylindrical inner surface of container main body 21a and the outer surface of plunger 21b.

The container main body 21a, nozzle 21n and plunger 21b are preferably made of a synthetic resin such as polyethylene. The container main body 21a may also be made of a metal material such as aluminum.

A sealing film 22 serving as the second sealing structure is a sheet which covers entirely the portion (i.e., sealing section of the first sealing structure) of the opening (i.e., inlet for injecting the silicone composition) of the container main body 21a, which is sealed with the plunger 21b, to further seal the sealing section. In the cartridge 20, the sealing section is preferably further sealed by securing the sealing film 22 to the open end of the container main body 21a through heat fusion or bonding such that the opening (inlet) of the container main body 21a is capped. Preferably the space between the portion (i.e., sealing section of the first sealing structure) of the opening of the container main body 21a, which is sealed with the plunger 21b, and the sealing film 22 is deaerated before the sealing film 22 is fixedly secured. The sealing film 22 is preferably a film of synthetic resin such as polyethylene, or a multilayer film composed of a film of synthetic resin such as polyethylene and a metal film or foil such as aluminum.

The member having a function of consuming and removing oxygen and water is depicted as a member 23, which is preferably disposed in the space defined between the portion (sealing section of the first sealing structure) of the opening of container main body 21a, which is sealed with plunger 21b, and the sealing film 22 and more preferably fixedly secured to the top of plunger 21b.

In the case of cartridge 20, during storage, the sealing section is formed by sealing the opening of container main body 21a with the plunger 21b and further sealed with the sealing film 22 whereby the entry of air (i.e., oxygen and water) into the sealing section is inhibited. In addition, the member 23 disposed between plunger 21b and sealing film 22 functions to remove oxygen and water in the narrow space or gap between the sealing section and sealing film 22 whereby the entry of oxygen and water into the sealing section is further inhibited. This further improves the storage and retention of the addition-curable liquid silicone composition of aerobic cure type and renders the transportation thereof more flexible. On use of the addition-curable liquid silicone composition, the composition is ready to apply after removing the sealing film 22 and member 23 from the cartridge 20 and mounting it to the cartridge gun.

### (Package)

A further embodiment of the invention is a package. This embodiment is a packaged container wherein the first sealing structure which is a container in the form of a tank, cartridge or bag is entirely covered with the second sealing structure of film shape.

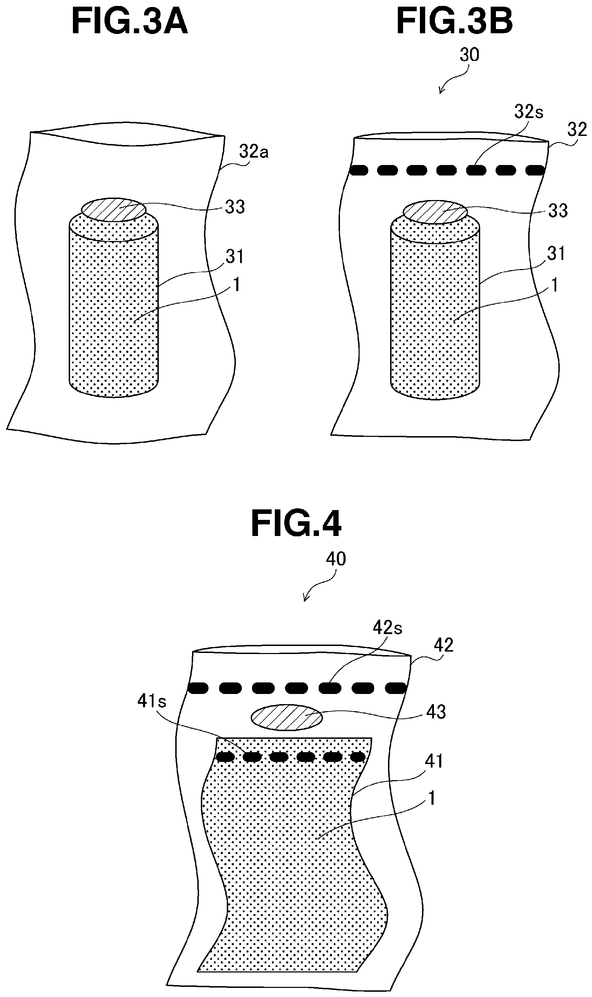

FIG. 3 shows the construction of a package 1 as a third embodiment of the addition-curable liquid silicone composition-storing container according to the invention. FIG. 3(a) shows the construction of the package before it is sealably closed with the second sealing structure. FIG. 3(b) shows the construction of the package after it is sealably closed with the second sealing structure.

A package 30 which is the addition-curable liquid silicone composition-storing container is composed of a container main body 31 to be filled with the silicone composition and being the first sealing structure, a sealing film 32 which is the second sealing structure and entirely covers the container main body 31 and member 33, and a member 33 which is the member having a function of consuming and removing oxygen and water.

The container main body 31 is a cylindrical container which is filled with the addition-curable liquid silicone composition 1 and has a sealing section (not shown) constructed by sealing the inlet through which the silicone composition 1 has been injected. The container main body 31 is constructed, for example, by the container main body 21a, nozzle 21n and plunger 21b of the cartridge 20.

The sealing film 32 covers the container main body 31 and member 33 entirely to seal them. The sealing film 32 is preferably a film of synthetic resin such as polyethylene, or a multilayered film composed of a film of synthetic resin such as polyethylene and a metal film or foil such as aluminum.

The member having a function of consuming and removing oxygen and water is depicted as a member 33, which is preferably fixedly secured to the top of container main body 31 where the sealing section is disposed.

The package 30 is manufactured by placing the container main body 31 filled with the addition-curable liquid silicone composition 1 and the member 33 disposed at the top of container main body 31 inside a bag shaped sealing film 32a having an opening as shown in FIG. 3(a), and bonding or heat fusing the entire periphery of sealing film 32a in the vicinity of the bag opening to convert the bag opening to the sealing section 32s as shown in FIG. 3(b). Preferably, the interior of sealing film 32a is deaerated before the container main body 31 and member 33 are sealably closed with the sealing film 32 by bonding or heat fusion. It is noted that the sealing film 32a may be a so-called pouch container obtained by mating a pair of film sheets and bonding or heat fusing the sheets along their three sides.

In the case of package 30, during storage, the sealing section is formed by sealing the opening of container main body 31 and further sealed with the sealing film 32 whereby the entry of air (i.e., oxygen and water) into the sealing section is inhibited. In addition, the member 13 disposed between container main body 31 and sealing film 32 functions to remove oxygen and water in the space or gap between the sealing section and sealing film 32 whereby the entry of oxygen and water into the sealing section is further inhibited. This further improves the storage and retention of the addition-curable liquid silicone composition of aerobic cure type and renders the transportation thereof more flexible. On use of the addition-curable liquid silicone composition, once the sealing film 32 is torn off to open the seal and the sealing film 32 and member 33 are removed, the container main body 31 is ready for use in the desired application.

FIG. 4 shows the construction of package (2) which is a fourth embodiment of the addition-curable liquid silicone composition-storing container according to the invention.

A package 40 which is the addition-curable liquid silicone composition-storing container is composed of a container main body 41 in the form of film to be filled with the silicone composition and being the first sealing structure, a sealing film 42 which is the second sealing structure and entirely encloses the container main body 41 and member 43, and a member 43 which is the member having a function of consuming and removing oxygen and water.

The container main body 41 is a packaging container made of a film, to be filled with the addition-curable liquid silicone composition 1. It is preferably made a film of synthetic resin such as polyethylene, or a multilayered film composed of a film of synthetic resin such as polyethylene and a metal film or foil such as aluminum. The container main body 41 is originally a bag-shaped container having a sealing section 41s which is constructed by bonding or heat fusing the inlet (the entire periphery of a bag opening), through which the silicone composition 1 has been injected, to seal the port. It is noted that the container main body 41 may be a so-called pouch container obtained by mating a pair of film sheets and bonding or heat fusing the sheets along their four sides.

The sealing film 42 sealably encloses the entire container main body 41 and member 43. It is preferably a film of synthetic resin such as polyethylene or a multilayered film composed of a film of synthetic resin such as polyethylene and a metal film or foil such as aluminum.

The member having a function of consuming and removing oxygen and water is depicted as a member 43, which is preferably fixedly secured near the sealing section 41s of container main body 41.

The package 40 is manufactured by placing the container main body 41 filled with the addition-curable liquid silicone composition 1 and the member 43 disposed in the vicinity of the sealing section 41s of container main body 41 inside a bag-shaped sealing film having an opening, and bonding or heat fusing the entire periphery of sealing film in the vicinity of the bag opening to convert the bag opening to the sealing section 42s. Preferably, the interior of the bag-shaped sealing film is deaerated before the container main body 41 and member 43 are sealably closed with the sealing film 42 by bonding or heat fusion. It is noted that the bag-shaped sealing film may be a so-called pouch container obtained by mating a pair of film sheets and bonding or heat fusing the sheets along their three sides.

In the case of package 40, during storage, the sealing section 41s is formed by sealing the opening of container main body 41 and further sealed with the sealing film 42 whereby the entry of air (i.e., oxygen and water) into the sealing section is inhibited. In addition, the member 43 disposed between container main body 41 and sealing film 42 functions to remove oxygen and water in the space or gap between sealing section 41s and sealing film 42 whereby the entry of oxygen and moisture into sealing section 41s is further inhibited. This further improves the storage and retention of the addition-curable liquid silicone composition of aerobic cure type and renders the transportation thereof more flexible. On use of the addition-curable liquid silicone composition, once the sealing film 42 is torn off to open the seal and the sealing film 42 and member 43 are removed, the container main body 41 is ready for use in the desired application.

### [Addition-curable liquid silicone composition]

The invention intends to store an addition-curable liquid silicone composition, specifically addition-curable liquid silicone rubber composition or addition-curable liquid silicone gel composition, which is preferably a composition comprising the following components (A) to (C) and optionally other components.

### [(A) Alkenyl-containing diorganopolysiloxane]

Component (A) is an alkenyl-containing diorganopolysiloxane which is a straight or branched diorganopolysiloxane having at least one alkenyl group, preferably two or more alkenyl groups per molecule. It is a main component or base polymer in the addition-curable liquid silicone composition that the invention intends to store, referred to as "silicone composition," hereinafter. In general, it is a straight diorganopolysiloxane having a backbone composed of repeating diorganosiloxane units and capped at both ends of the molecular chain with triorganosiloxy groups. It may also be a branched one having a branched structure in some of siloxane structures constituting the molecular chain.

The alkenyl-containing diorganopolysiloxane as component (A) has at least one alkenyl group, generally 1 to 50, preferably 1 to 20, more preferably 1 to 10, even more preferably 1 or 2 alkenyl groups per molecule. Exemplary alkenyl groups are groups of about 2 to 8 carbon atoms, such as vinyl, allyl, propenyl, isopropenyl, butenyl, hexenyl, and cyclohexenyl. The alkenyl group may be bonded to the silicon atom at the end of the molecular chain or a silicon atom at a non-terminal position (midway) of the molecular chain. Preferably the alkenyl group is bonded to the silicon atom at one or both ends of the molecular chain. In this case, the alkenyl groups may be positioned only at both ends of the molecular chain or at both ends and non-terminal positions (midway) of the molecular chain.

One example of the alkenyl-containing diorganopolysiloxane is a straight diorganopolysiloxane having the general formula (1).

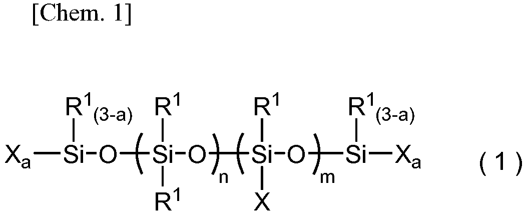

Herein R¹ is independently a substituted or unsubstituted monovalent hydrocarbon group free of aliphatic unsaturated bond. X is an alkenyl group, at least one being contained in the molecule. The subscript n is an integer of at least 0, m is an integer of at least 0, and "a" is an integer of 0 to 3 independently for each of silicon atoms to which X is bonded.

In formula (1), examples of the substituted or unsubstituted monovalent hydrocarbon group free of aliphatic unsaturated bond, represented by R¹, include groups of 1 to 12 carbon atoms, preferably 1 to 10 carbon atoms, more preferably 1 to 6 carbon atoms, specifically alkyl groups such as methyl, ethyl, propyl, isopropyl, butyl, isobutyl, tert-butyl, pentyl, neopentyl, hexyl, heptyl, octyl, nonyl, decyl and dodecyl; cycloalkyl groups such as cyclopentyl, cyclohexyl, and cycloheptyl; aryl groups such as phenyl, tolyl, xylyl, naphthyl and biphenylyl; aralkyl groups such as benzyl, phenylethyl, phenylpropyl, and methylbenzyl; and substituted forms of the foregoing groups in which some or all of the carbon-bonded hydrogen atoms are substituted by halogen (e.g., fluorine, chlorine or bromine) or cyano, such as chloromethyl, 2-bromoethyl, 3-chloropropyl, 3,3,3-trifluoropropyl, chlorophenyl, fluorophenyl, cyanoethyl, and 3,3,4,4,5,5,6,6,6-nonafluorohexyl. Preferred are substituted or unsubstituted C₁-C₃ alkyl groups such as methyl, ethyl, propyl, chloromethyl, bromoethyl, 3,3,3-trifluoropropyl, and cyanoethyl, and substituted or unsubstituted phenyl groups such as chlorophenyl and fluorophenyl. More preferably R¹ is methyl or phenyl.

Examples of the alkenyl group X include groups of about 2 to 8 carbon atoms, such as vinyl, allyl, propenyl, isopropenyl, butenyl, hexenyl, and cyclohexenyl. Inter alia, lower alkenyl groups such as vinyl and allyl are preferred.

In formula (1), n is an integer of at least 0, preferably 10 to 2,000, more preferably 50 to 1,200; m is an integer of at least 0, preferably 0 to 40, more preferably 0 to 20. Preferably n and m are integers meeting 10 ≤ n+m ≤ 2,000, more preferably 50 ≤ n+m ≤ 1,200 and 0 ≤ m/(n+m) ≤ 0.2. The units within parentheses with n and m may be randomly arranged.

In formula (1), "a" is an integer of 0 to 3, preferably 1 to 3 independently for each of silicon atoms to which X is bonded.

The alkenyl-containing diorganopolysiloxane should preferably have a viscosity at 23°C of the order of 10 to 1,000,000 mPa·s, more preferably 100 to 500,000 mPa·s.

Herein, the number of repeating diorganosiloxane units (or degree of polymerization) may be determined as a number average molecular weight (or number average degree of polymerization) by gel permeation chromatography (GPC) versus polystyrene standards using toluene or the like as the developing solvent. The viscosity is generally measured at 23°C by a rotational viscometer, e.g., BL, BH, BS or cone-plate type or rheometer.

The alkenyl-containing diorganopolysiloxane as component (A) may be used alone or in admixture. In order to avoid impairment of the function of a platinum catalyst mixture as component (C), it is recommended to reduce the amounts of oxygen and water in the alkenyl-containing diorganopolysiloxane as component (A) before it is blended into the composition. This may be achieved, for example, by purging with an inert gas such as nitrogen gas, heating, vacuum pumping or a combination thereof.

### [(B) Organohydrogenpolysiloxane]

Component (B) is an organohydrogenpolysiloxane. It is an organohydrogenpolysiloxane of straight, cyclic, branched or three-dimensional network structure having at least two silicon-bonded hydrogen atoms (or SiH groups) per molecule, and functions as a curing or crosslinking agent in the addition-curable liquid silicone composition that the invention intends to store.

The organohydrogenpolysiloxane as component (B) functions as a curing or crosslinking agent in the silicone composition that the invention intends to store, has at least 2, generally 2 to about 200, preferably 3 to about 100 silicon-bonded hydrogen atoms (or SiH groups) in the molecule, and may be either of straight, branched, cyclic and three-dimensional network or resinous structures.

Exemplary of the organohydrogenpolysiloxane is an organohydrogenpolysiloxane having the average compositional formula (2):

H_{b}R²_{c}SiO_{(4-b-c)/2} (2)

wherein R² is independently a substituted or unsubstituted monovalent hydrocarbon group free of aliphatic unsaturated bond, b and c are numbers in the range: 0.001 ≤ b ≤ 1.2, 0.8 ≤ c ≤ 2, and 0.8 < b+c ≤ 3, preferably 0.05 ≤ b ≤ 1, 1.5 ≤ c ≤ 2, and 1.8 < b+c ≤ 2.7.

In formula (2), examples of the substituted or unsubstituted monovalent hydrocarbon group free of aliphatic unsaturated bond, represented by R², are as exemplified above for R¹ in formula (1), for example, groups of 1 to 12 carbon atoms, preferably 1 to 10 carbon atoms, more preferably 1 to 7 carbon atoms. Of these, lower alkyl groups of 1 to 3 carbon atoms such as methyl, phenyl and 3,3,3-trifluoropropyl groups are especially preferred.

Preferably, organohydrogenpolysiloxanes in which the number of silicon atoms per molecule is 2 to about 300, more preferably 2 to about 150, even more preferably 2 to about 100 and which are liquid at room temperature are used as component (B). It is noted that the silicon-bonded hydrogen atom may be positioned at a terminal or intermediate (non-terminal) position of the molecular chain or both.

Examples of the organohydrogenpolysiloxane include methylhydrogencyclosiloxane oligomers such as 1,1,3,3-tetramethyldisiloxane, 1,1,3,3,5,5-hexamethyltrisiloxane, 1,3,5,7-tetramethyltetracyclosiloxane, 1,3,5,7,9-pentamethylpentacyclosiloxane; tris(dimethylhydrogensiloxy)methylsilane, tris(dimethylhydrogensiloxy)phenylsilane, molecular chain both end trimethylsiloxy-capped methylhydrogenpolysiloxane, molecular chain both end trimethylsiloxy-capped dimethylsiloxane/methylhydrogensiloxane copolymers, molecular chain both end trimethylsiloxy-capped diphenylsiloxane/methylhydrogensiloxane copolymers, molecular chain both end trimethylsiloxy-capped methylphenylsiloxane/methylhydrogensiloxane copolymers, molecular chain both end trimethylsiloxy-capped dimethylsiloxane/diphenylsiloxane/methylhydrogensiloxane copolymers, molecular chain both end dimethylhydrogensiloxy-capped dimethylpolysiloxane, molecular chain both end dimethylhydrogensiloxy-capped methylhydrogenpolysiloxane, molecular chain both end dimethylhydrogensiloxy-capped dimethylsiloxane/methylhydrogensiloxane copolymers, molecular chain both end dimethylhydrogensiloxy-capped diphenylsiloxane/methylhydrogensiloxane copolymers, molecular chain both end dimethylhydrogensiloxy-capped methylphenylsiloxane/methylhydrogensiloxane copolymers, molecular chain both end dimethylhydrogensiloxy-capped dimethylsiloxane/diphenylsiloxane/methylhydrogensiloxane copolymers, silicone resins of three-dimensional network structure which are composed of dimethylhydrogensiloxy units and SiO_{4/2} units and optionally contain trimethylsiloxy units, dimethylsiloxane units, methylhydrogensiloxane units, hydrogensilsesquioxane units and/or methylsilsesquioxane units, and the above-exemplified compounds in which some or all methyl groups are replaced by other alkyl groups or phenyl groups. It is noted that component (B) and the organosilicon compound in component (C) may be the same.

The organohydrogenpolysiloxane used in the addition-curable liquid silicone composition that the invention intends to store may be prepared by well-known methods. For example, it may be prepared by co-hydrolysis of at least one chlorosilane selected from those of the general formulae: R²SiHCl₂ and R²₂SiHCl wherein R² is as defined above, or co-hydrolysis of the chlorosilane and at least one chlorosilane selected from those of the general formulae: R²₃SiCl and R²₂SiCl₂ wherein R² is as defined above. The organohydrogenpolysiloxane may also be a product obtained from equilibration of the polysiloxane resulting from co-hydrolysis.

As viewed from the aspect of obtaining a satisfactory silicone rubber or gel after curing, the amount of the organohydrogenpolysiloxane blended is desirably set so as to give 0.5 to 4 moles, more desirably 0.8 to 2.5 moles of silicon-bonded hydrogen atom (i.e., SiH group) in the organohydrogenpolysiloxane per mole of alkenyl group in the alkenyl-containing diorganopolysiloxane as component (A).

The organohydrogenpolysiloxane as component (B) may be used alone or in admixture. In order to avoid impairment of the function of an aerobic platinum catalyst mixture as component (C), it is recommended to reduce the amounts of oxygen and water in the organohydrogenpolysiloxane as component (B) before it is blended into the composition. This may be achieved, for example, by purging with an inert gas such as nitrogen gas, heating, vacuum pumping or a combination thereof.

### [(C) Platinum catalyst]

The addition-curable liquid silicone composition that the invention intends to store is characterized in that a platinum catalyst having aerobic properties (aerobic reactivity), that is, a platinum catalyst which remains inactive in a closed state where any contact with ambient air is shut off (closed state having reduced water and oxygen contents), but is activated by contact with ambient air is blended as component (C), platinum catalyst for promoting hydrosilation addition reaction between alkenyl groups in component (A) and silicon-bonded hydrogen atoms (SiH groups) in component (B). Examples of component (C) encompass all of the platinum catalyst mixtures contained in the curable liquid silicone composition disclosed in Patent Document 7. Specific examples are described below.

### [Platinum catalyst mixture]

The platinum catalyst mixture used as component (C) is an aerobic catalyst in the form of a reaction mixture of a platinum/alkenyl-containing organosiloxane complex with an organosilicon compound having at least one silicon-bonded hydrogen atom (SiH group) per molecule in an amount to provide a molar excess (a molar ratio of more than 1) of SiH groups relative to alkenyl groups in the platinum/alkenyl-containing organosiloxane complex.

Preferred examples of the platinum/alkenyl-containing organosiloxane complex in the platinum catalyst mixture include complexes of platinum, platinum chloride, chloroplatinic acid or chloroplatinic acid salts with vinyl-containing siloxanes, e.g., organodisiloxane compounds having two alkenyl groups per molecule such as 1,3-divinyl-1,1,3,3-tetramethyldisiloxane. In the complex of chloroplatinic acid (H₂PtCl₆) with 1,3-divinyl-1,1,3,3-tetramethyldisiloxane, for example, three molecules of 1,3-divinyl-1,1,3,3-tetramethyldisiloxane which is a bidentate ligand coordinate with one molecule of chloroplatinic acid.

The platinum/alkenyl-containing organosiloxane complex is preferably used as a solution in solvents such as toluene, lower alcohols, higher alcohols or silicones. The solution preferably has a platinum atom content or concentration of 0.05 to 5% by weight.

As the organosilicon compound having at least one silicon-bonded hydrogen atom (SiH group) in the platinum catalyst mixture, organohydrogensilanes and organohydrogensiloxane oligomers having at least one SiH group (for example, 1 to 10, preferably 1 to 5 SiH groups) per molecule are preferably used. From the standpoints of handling and safety, organohydrogensiloxane oligomers are more preferred. Organohydrogensiloxane oligomers having per molecule at least two hydrogen atoms bonded to silicon atoms which adjoin each other via an oxygen atom to form a siloxane linkage (Si-O-Si), i.e., at least two adjoining SiH groups are even more preferred. The organohydrogensiloxane oligomers may have a linear or cyclic molecular structure wherein the number of silicon atoms per molecule is preferably 2 to 40, more preferably 2 to 10, even more preferably 2 to 5.

Examples of the organohydrogensilanes and organohydrogensiloxane oligomers include trialkoxy(hydrogen)silanes, alkyldialkoxy(hydrogen)silanes, dialkylalkoxy(hydrogen)silanes, 1,1,1,3,3-pentamethyldisiloxane, 1,1,3,3-tetramethyldisiloxane, 1,1,1,3,5,5,5-heptamethyltrisiloxane, 1,1,3,3,5,5-hexamethyltrisiloxane, 1,1,1,3,5,7,7,7-octamethyltetrasiloxane, 1,3,5,7-tetramethylcyclotetrasiloxane and 1,3,5,7,9-pentamethylcyclopentasiloxane. One or more of these exemplary compounds may be used.

In preparing the platinum catalyst mixture from the platinum/alkenyl-containing organosiloxane complex and the organosilicon compound, since the organosilicon compound is added in molar excess (more than 1 mole, preferably 1.1 to 30 moles, more preferably 1.5 to 25 moles, even more preferably 5 to 25 moles per mole of alkenyl group in the complex) relative to the alkenyl group, alkenyl groups in the complex react with SiH groups originating from the organosilicon compound in an oxygen-free atmosphere so that all the alkenyl groups are converted to alkylene groups through hydrosilation addition reaction. In the platinum catalyst mixture, the alkenyl groups are substantially extinguished, and SiH groups originating from the excess of organosilicon compound are left behind.

With respect to the platinum catalyst mixture, the following is noteworthy. When the organosilicon compound having at least one silicon-bonded hydrogen atom is an organohydrogensiloxane oligomer having per molecule at least two hydrogen atoms bonded to silicon atoms (i.e., adjoining silicon atoms) which adjoin each other via an oxygen atom to form a siloxane linkage (Si-O-Si), i.e., at least two adjoining SiH groups, specifically when the organosilicon compound is 1,1,3,3-tetramethyldisiloxane, 1,1,1,3,5,7,7,7-octamethyltetrasiloxane, 1,3,5,7-tetramethylcyclotetrasiloxane or 1,3,5,7,9-pentamethylcyclopentasiloxane, the platinum catalyst mixture is preferably obtained by mixing the organohydrogensiloxane oligomer having at least two adjoining SiH groups with the platinum/alkenyl-containing organosiloxane complex uniformly in an oxygen-free atmosphere to form a reaction mixture and contacting the reaction mixture with water and/or oxygen by such means as further mixing them in air. Alternatively, the platinum catalyst mixture is preferably obtained by mixing the organohydrogensiloxane oligomer having at least two adjoining SiH groups with the platinum/alkenyl-containing organosiloxane complex in such a ratio that SiH groups in the organohydrogensiloxane oligomer having at least two adjoining SiH groups are in molar excess relative to alkenyl groups in the platinum/alkenyl-containing organosiloxane complex, while keeping them in contact with water and/or oxygen. Then, the addition-curable liquid silicone composition containing the mixture as the hydrosilation addition reaction catalyst is further improved in long-term one-pack storage stability in the closed state without detracting from the curability upon contact with airborne water (moisture) and/or oxygen.

The method for preparing the platinum catalyst mixture is characterized by the step of mixing the platinum/alkenyl-containing organosiloxane complex with the organosilicon compound having at least one silicon-bonded hydrogen (SiH group) per molecule in such a ratio that SiH groups in the organosilicon compound are in molar excess relative to alkenyl groups in the platinum/alkenyl-containing organosiloxane complex, in an oxygen-free atmosphere (e.g., a closed state with zero oxygen and low water content where any contact with water (moisture) and oxygen is shut off) to form a reaction mixture.

Such a ratio that SiH groups in the organosilicon compound are in molar excess relative to alkenyl groups in the platinum/alkenyl-containing organosiloxane complex means that the amounts of the platinum/alkenyl-containing organosiloxane complex and the organosilicon compound are related such that SiH groups in the organosilicon compound are more than 1 mole, preferably 1.1 to 30 moles, more preferably 1.5 to 25 moles, even more preferably 5 to 25 moles per mole of alkenyl groups in the complex.

The mixing method is not particularly limited as long as the platinum/alkenyl-containing organosiloxane complex and the organosilicon compound having at least one silicon-bonded hydrogen (SiH group) per molecule are uniformly mixed. The mixing step is preferably carried out, for example, in a reactor made of glass such as glass flask or reactor made of stainless steel.

The atmosphere during mixing is an oxygen-free atmosphere, preferably an inert gas atmosphere like nitrogen or reduced pressure (vacuum). The temperature during mixing may be room temperature (23°C±15°C, the same holds true, hereinafter), with no need for heating. The mixing time (or reaction time) may be set such that the platinum/alkenyl-containing organosiloxane complex and the organosilicon compound are uniformly mixed and is, for example, 0.5 to 100 hours, preferably 1 to 24 hours.

When the organosilicon compound having at least one silicon-bonded hydrogen atom is an organohydrogensiloxane oligomer having per molecule at least two hydrogen atoms bonded to silicon atoms which adjoin each other via an oxygen atom to form a siloxane linkage (Si-O-Si), i.e., at least two adjoining SiH groups, specifically when the organosilicon compound is 1,1,3,3-tetramethyldisiloxane, 1,1,1,3,5,7,7,7-octamethyltetrasiloxane, 1,3,5,7-tetramethylcyclotetrasiloxane or 1,3,5,7,9-pentamethylcyclopentasiloxane, the method for preparing the platinum catalyst mixture preferably includes the step of further mixing the reaction mixture (obtained by mixing in an oxygen-free atmosphere) in contact with water and/or oxygen. In this step, the reaction mixture is contacted with water and/or oxygen by such means as mixing in ambient air. The time of mixing in ambient air is, for example, preferably 0.5 to 100 hours, more preferably 1 to 12 hours. Thereafter, the platinum catalyst mixture is placed in a closed container.

The other method for preparing the platinum catalyst mixture is a method for preparing the platinum catalyst mixture including the step of mixing the platinum/alkenyl-containing organosiloxane complex with the organosilicon compound having at least one silicon-bonded hydrogen atom (SiH group) per molecule to form a reaction mixture, characterized in that when the organosilicon compound having at least one silicon-bonded hydrogen atom per molecule is an organohydrogensiloxane oligomer having per molecule at least two hydrogen atoms bonded to silicon atoms which adjoin each other via an oxygen atom to form a siloxane linkage (Si-O-Si), i.e., at least two adjoining SiH groups, and the platinum/alkenyl-containing organosiloxane complex and the organosilicon compound having at least one silicon-bonded hydrogen atom (SiH group) per molecule are mixed in such a ratio that SiH groups in the organosilicon compound are in molar excess relative to alkenyl groups in the platinum/alkenyl-containing organosiloxane complex while keeping them in contact with water and/or oxygen. In the mixing step, the components are contacted with water and/or oxygen by such means as mixing in ambient air. The time of mixing in ambient air is, for example, preferably 0.5 to 100 hours, more preferably 1 to 12 hours. Thereafter, the platinum catalyst mixture is placed in a closed container.

Then, the addition-curable liquid silicone composition containing the mixture as a hydrosilation addition reaction catalyst is further improved in long-term one-pack storage stability in the closed state without detracting from the curability upon contact with airborne water (moisture) and/or oxygen.

As long as the platinum catalyst mixture is prepared as above, the platinum catalyst mixture remains low in catalytic activity as the hydrosilation addition reaction catalyst in a closed container which shuts off any contact with oxygen and has a low water content, but assumes a high catalytic activity as the hydrosilation addition reaction catalyst in contact with airborne water (moisture) and/or oxygen. Therefore, when this platinum catalyst mixture is added to a curable liquid silicone composition of hydrosilation addition reaction cure type, for example, and when the curable liquid silicone composition is placed and stored in a closed container which shuts off any contact with oxygen and has a low water content, the composition exhibits a satisfactory long-term one-pack storage stability at refrigeration to normal temperature. When the composition is contacted with airborne water (moisture) and/or oxygen by unsealing the closed container, the platinum catalyst mixture in the composition is activated at room temperature to a high catalytic activity. Then, crosslinking (curing) reaction due to hydrosilation addition reaction rapidly takes place even under non-heated conditions, and the curable liquid silicone composition rapidly cures not only at the surface in contact with air, but also to a deep section. That is, the curable liquid silicone composition is converted to rubber or gel.

In the addition-curable liquid silicone composition that the invention intends to store, the amount of the platinum catalyst mixture as component (C) is a so-called catalytic amount, specifically an amount to provide 0.1 to 1,000 ppm, preferably 0.5 to 200 ppm by weight of platinum atom in component (C) based on the total weight of components (A) and (B). If the amount of component (C) is less than the range, on use of the material, the material is under-cured due to the influence of a catalyst inhibition factor. If the amount is more than the range, the material is poor in storage stability. Since the amount of component (C) is a so-called catalytic amount, the molar excess of SiH groups remaining in component (C) is as minor as negligible, exerting substantially no influence on the value of molar ratio of SiH groups in component (B) to alkenyl groups in component (A).

### [Other components]

To the addition-curable liquid silicone composition that the invention intends to store, a variety of optional components as described below can be added besides components (A) to (C) as long as the properties of the silicone composition are not impaired.

### [(D) Dehydrating agent]

In the addition-curable liquid silicone composition that the invention intends to store, a dehydrating agent as component (D) may be blended for removing any water in the composition as an optional component, if necessary. Blending the dehydrating agent as component (D) leads to better storage stability.

The platinum catalyst mixture as component (C) which is the essential feature of the addition-curable liquid silicone composition has such properties (that is, aerobic reaction type) that its catalytic activity is suppressed low in an oxygen-free, low water content environment where any contact with water (moisture) and oxygen is shut off, but activated upon contact with water and/or oxygen incoming from ambient air. It is confirmed that by reducing the water contents of components and the water content of the mixed composition, the addition-curable liquid silicone composition is improved in one-pack storage stability. It is then useful for establishing one-pack storage stability to introduce means for consuming (or dehydrating) water originating from starting components during storage in the closed container and minor water entering from without the container.

A compound capable of dehydration may be either an inorganic or organic compound as long as the functions of components (A), (B) and (C) are not impaired. Some of the compounds capable of dehydration have a possibility that by-product compounds of dehydrating reaction cause bubbling, and many compounds incur decomposition of the hydrogensiloxane in the composition and a decline of catalytic activity of the platinum catalyst mixture.

As the dehydrating agent or component (D), silylketenes (including silyl ketene acetals), silyl enol esters, and α-silyl esters are preferred because these are capable of efficient in-system dehydration. Since these compounds form by-products of dehydration which are of the structure that does not impair the functions of components (A), (B) and (C) and are dissolvable in the addition-curable liquid silicone composition, a stable curable liquid silicone composition is obtained. Inter alia, silylketenes (including silyl ketene acetals) and α-silyl esters do not incur decomposition of hydrogensiloxane and a decline of catalytic activity of the platinum catalyst mixture because dehydrating reaction takes place under non-basic conditions.

Examples of the silylketenes (including silyl ketene acetals) include 1-methoxy-2-methyl-1-(trimethylsiloxy)propene, dimethyl ketene trimethylsilyl acetal, and tert-butoxy-1-(trimethylsiloxy)propene.

Examples of the α-silyl esters include ethyl 2-(trimethoxysilyl)propionate (ECMS) and octyl 2-(methyldimethoxysilyl)propionate (OCMS-2).

The dehydrating agent as component (D) may be previously added to each component or added during preparation of the composition, or post-added to the composition after preparation. The amount of the dehydrating agent added is preferably up to 5% by weight, more preferably up to 2% by weight of the overall composition.

Also, a catalyst for promoting reaction of component (D) with water may be added. Suitable catalysts include titanic esters such as tetra(isopropyl) titanate (TPT), tetrabutyl titanate (TBT), and tetra(2-ethylhexyl) titanate (TOT); titanium chelate compounds such as titanium diisopropoxybis(ethylacetoacetate) and titanium tetraacetylacetonate, and tin compounds such as dibutyltin dimethoxide and dibutyltin dilaurate. The amount of the catalyst added is up to 2% by weight, more preferably up to 1% by weight of the overall composition.

### [(E) Addition reaction inhibitor]

It is useful to blend an addition reaction inhibitor as optional component (E) in the addition-curable liquid silicone composition, if necessary, for the purpose of improving one-pack storage stability like the dehydrating agent as component (D).

As mentioned above, the platinum catalyst mixture as component (C) which is the essential feature of the addition-curable liquid silicone composition has the property that its catalytic activity is activated upon contact with water. There is a chance that part of the platinum catalyst mixture as component (C) is incidentally activated as the addition reaction catalyst with water in starting components, water entrained in the step of preparing the composition and the step of filling in a container, and water entering from without the closed container. This suggests that the one-pack storage stability of the composition can be considerably degraded by the partially activated catalyst. Blending the addition reaction inhibitor as component (E) in an auxiliary manner restrains such degradation of one-pack storage stability.

Examples of the addition reaction inhibitor as component (E) include acetylene alcohols such as 1-ethynylcyclohexanol and 3-methyl-tridec-1-yn-3-ol (EMDC); silane and siloxane-modified acetylene alcohols such as dimethylbis(1,1-dimethyl-2-propynyloxy)silane (PLR-22) and 3-(trimethylsilyloxy)-3-methyl-1-butyne (PLR-31); phosphorous acid compounds, especially phosphite esters such as tri(isopropyl) phosphite, tris(di-tert-butylphenyl) phosphite, triphenyl phosphite and tris(2-ethylhexyl) phosphite; ethylenediamines such as tetramethylethylenediamine; benzotriazoles such as benzotriazole and 5-methyl-1H-benzotriazole; and mixtures thereof. Inter alia, phosphorous acid compounds, especially phosphite esters such as tri(isopropyl) phosphite and tris(di-tert-butylphenyl) phosphite are preferred because addition-curable liquid silicone compositions having satisfactory one-pack storage stability in closed state are obtained.

The amount of the addition reaction inhibitor as component (E) added may be determined as appropriate, depending on its capability, as long as the curability of the addition-curable liquid silicone composition is not affected. When phosphorous acid compounds, especially phosphite esters are used, the addition amount may be minor, specifically less than 1 mole, especially 0 to about 0.75 mole per mole of platinum atom in the composition. If the amount of component (E) added is too much, the platinum catalyst mixture (C) which has been activated with water on use can be deactivated, with a possibility that the curability upon opening to air is declined.

### [(F) Inorganic filler]

To the addition-curable liquid silicone composition that the invention intends to store, an inorganic filler as optional component (F) may be blended, if necessary, for the purposes of adjusting the viscosity of uncured composition, increasing the strength of cured silicone rubber or cured silicone gel after curing, and adjusting outer appearance color. As the inorganic filler (F), reinforcing inorganic fillers such as fumed silica and fumed titanium dioxide and non-reinforcing inorganic fillers such as calcium silicate, titanium dioxide, ferric oxide, and carbon black may be added.

The amount of the inorganic filler (F) blended is up to 200 parts by weight per 100 parts by weight of component (A). When component (F) is blended, its amount is preferably 0.1 to 200 parts by weight, more preferably 0.5 to 50 parts by weight per 100 parts by weight of component (A). If the amount of the inorganic filler is less than 0.1 part by weight, sometimes no addition effect is obtained. If the amount exceeds 200 parts by weight, it is sometimes difficult to mix the filler into a uniform mixture.

### [(G) Tackifier]

To the addition-curable liquid silicone composition that the invention intends to store, in the application wherein high self-adhesion is necessary, a tackifier as optional component (G) may be blended, if necessary, for the purpose of improving the adhesion of a cured product to various substrates. Exemplary of the tackifier are hydrolyzable organosilane compounds such as alkoxysilanes containing a monovalent hydrocarbon group having a functional group containing a heteroatom selected from oxygen, nitrogen and sulfur, e.g., epoxy, (meth)acryloxy or mercapto, which are so-called carbon-functional silanes or silane coupling agents, and/or partial hydrolytic condensates thereof.

When the tackifier as component (G) is blended, the amount is preferably 0.1 to about 20 parts by weight, more preferably 0.2 to about 10 parts by weight per 100 parts by weight of component (A). If the amount of the tackifier is less than 0.1 part by weight, the adhesion development as intended may be insufficient. If the amount exceeds 20 parts by weight, an extreme lowering of material viscosity may occur.

### [(H) Plasticizer]

To the addition-curable liquid silicone composition that the invention intends to store, a plasticizer as optional component (H) may be blended, if necessary, for the purpose of adjusting the viscosity of the composition or the hardness of a cured product. Exemplary of the plasticizer are molecular chain both end trimethylsilyl-capped dimethylpolysiloxane (dimethylsilicone oil), molecular chain both end trimethylsilyl-capped dimethylsiloxane/diphenylsiloxane copolymers, and molecular chain both end trimethylsilyl-capped dimethylsiloxane/methylphenylsiloxane copolymers (methylphenylsilicone oil), which are free of functional groups participating in hydrosilation addition reaction such as alkenyl groups or hydrosilyl groups (SiH groups) in the molecule, that is, non-functional silicone oils.

When the plasticizer as component (H) is blended, the amount is preferably 0.1 to about 50 parts by weight, more preferably 0.5 to about 20 parts by weight per 100 parts by weight of component (A). If the amount of the non-functional silicone oil is less than 0.1 part by weight, the plasticization as intended may not be achieved. If the amount exceeds 50 parts by weight, the plasticizer may separate or bleed out of the cured material.

Besides the dehydrating agent (D), addition reaction inhibitor (E), inorganic filler (F), tackifier (G), and plasticizer (H) mentioned above as the optional components, an additive may be blended in the addition-curable liquid silicone composition that the invention intends to store, as another optional component. Exemplary additives include a pigment paste using a component like the non-functional silicone oil mentioned above as the plasticizer and a reinforcing silicone resin.

### (Method of preparing addition-curable liquid silicone composition)

The addition-curable liquid silicone composition that the invention intends to store may be prepared by mixing the above-mentioned components at room temperature in an environment which shuts off any contact with water (moisture) and oxygen and has a low oxygen concentration (substantially oxygen-free) and a low water content (e.g., nitrogen atmosphere) while adding in the order of alkenyl-containing diorganopolysiloxane (A), organohydrogenpolysiloxane (B), optionally dehydrating agent (D), addition reaction inhibitor (E), inorganic filler (F), tackifier (G), plasticizer (H), and aerobic platinum catalyst mixture (C). If a certain component is omitted, its order is skipped and the subsequent components are successively added.

### (Method of preparing container for storing addition-curable liquid silicone composition)

The container for storing the addition-curable liquid silicone composition may be prepared by the following procedure.
(i) The addition-curable liquid silicone composition as prepared above is injected into a container through an inlet constituting the first sealing structure in an environment as used in the preparation procedure (i.e., at room temperature in an environment which shuts off any contact with water (moisture) and oxygen and has a low oxygen concentration (substantially oxygen-free) and a low water content). The inlet is sealed by inserting, engaging or screwing a lid made of metal, glass, ceramic or resin to the inlet, or bonding or fussing (heat fusing) the inlet itself, thereby completing the first sealing structure.
(ii) A member having a function of consuming and removing oxygen and water (dehydrating/deoxygenating agent or a mixture of dehydrating agent and deoxygenating agent) is attached to the sealing section of the first sealing structure or in its vicinity.
(iii) At least the entire sealing section of the first sealing structure or the entire first sealing structure is covered with the second sealing structure, whereby the sealing section and the member having a function of consuming and removing oxygen and water are further sealed. More specifically, the second sealing structure of film shape is fixedly secured to the outer periphery of the sealing section of the first sealing structure with an adhesive agent or by heat fusion so that the "second sealing structure covers at least the entire sealing section of the first sealing structure". Alternatively, the entire first sealing structure is enclosed in the interior of the second sealing structure of bag shape, after which the opening of the second sealing structure is sealed by heat fusion or bonding so that the "second sealing structure covers the entire first sealing structure".

The container for storing the addition-curable liquid silicone composition is completed in this way.

### (Method of curing addition-curable liquid silicone composition)

The method of curing the addition-curable liquid silicone composition that the invention intends to store is characterized by the steps of taking the addition-curable liquid silicone composition out of the storing container and exposing it to ambient air at room temperature for curing.

When the addition-curable liquid silicone composition is exposed to ambient air, airborne water (moisture) and/or oxygen comes in contact with the platinum catalyst mixture (C) in the composition. The catalytic function of the platinum catalyst mixture is then activated and the addition-curable liquid silicone composition starts curing even at room temperature. The composition cures not only at the surface in contact with air, but also rapidly to a deep section, yielding a silicone rubber cured product or silicone gel cured product.

The resulting silicone rubber or gel which is a cured product of the addition-curable liquid silicone composition has satisfactory heat resistance and electric insulation and is applicable to vehicle-mounted parts, aircraft and electric appliances.

### EXAMPLES

Examples and Comparative Examples are given below for further illustrating the invention, but the invention is not limited thereto. It is noted that the viscosity is measured at 23°C by a rotational viscometer and the degree of polymerization is a number average degree of polymerization versus polystyrene standards by GPC analysis using toluene as developing solvent. As used herein, Me stands for methyl, Vi stands for vinyl, "room temperature" is 23°C, and "air" has an oxygen concentration of 21% by volume and a humidity of 50% RH.

### (Preparation of platinum catalyst mixture)

With reference to Patent Document 7 (WO 2022/270366), an aerobic platinum catalyst mixture (C-1) was prepared by the following procedure.

### (Preparation procedure)

In a nitrogen atmosphere at room temperature (23°C), a toluene solution (platinum content 0.5 wt%) of (C-a) chloroplatinic acid/1,3-divinyltetramethyldisiloxane complex as the platinum/alkenyl-containing organosiloxane complex and (C-b) 1,1,3,3-tetramethyldisiloxane as the organohydrogenpolysiloxane were combined in the ratio shown in Table 1 in a 25-g glass bottle, uniformly mixed over 12 hours for reaction. Thereafter, the bottle was closed. With the cap of the glass bottle opened in ambient air at room temperature (23°C), the mixture was uniformly mixed in contact with air for 2 hours. The cap was then closed. There was obtained aerobic platinum catalyst mixture (C-1).

**[Table 1]**

| | | |
|---|---|---|
| Platinum catalyst mixture | | C-1 |
| Platinum/alkenyl-containing organosiloxane complex | C-a | 8.0 g |
| Organohydrogenpolysiloxane | C-b | 2.0 g |
| (SiH_{C-b})/(Vi_{C-a}) molar ratio | | 21.4 |
| Mixing in contact with air | | yes |
| Mixture appearance | | green transparent |

Using platinum catalyst mixture (C-1) prepared above, addition-curable liquid silicone compositions (S-1) to (S-4) were prepared by the following procedure.

### (Preparation of addition-curable liquid silicone composition)

Each composition was prepared in a nitrogen atmosphere at room temperature (23°C) by uniformly mixing components in the amounts shown in Table 2 in a glass bottle and closing the bottle. In Table 2, the molar ratio of SiH groups in component (B) to vinyl groups in component (A) is 2.2 for all compositions (S-1) to (S-4).

The components were added in the order of alkenyl-containing diorganopolysiloxane (A), organohydrogenpolysiloxane (B), dehydrating agent (D), addition reaction inhibitor (E), and aerobic platinum catalyst mixture (C) while continuously mixing. If a certain component was omitted, its order was skipped and the subsequent components were successively added.

In order to prepare a composition in a reproducible manner, alkenyl-containing diorganopolysiloxane (A) and organohydrogenpolysiloxane (B) each were dehydrated in a glass flask by vacuum deaeration at 120°C prior to use. The steps of mixing the composition and filling it into a container were carried out in nitrogen atmosphere.

The components are identified below.
(A) Alkenyl-containing diorganopolysiloxane:
   (A-1) vinyl-containing linear diorganopolysiloxane having a viscosity of 5,000 mPa·s at 23°C, represented by the following average formula

      Vi(Me)₂SiO-(Si(Me)₂O)₃₀₀-Si(Me)₂Vi
   (A-2) vinyl-containing linear diorganopolysiloxane having a viscosity of 800 mPa·s at 23°C, represented by the following average formula

      Vi(Me)₂SiO-(Si(Me)₂O)₁₀₀-Si(Me)₃
   (A-3) vinyl-containing branched diorganopolysiloxane having a viscosity of 800 mPa·s at 23°C, represented by the following average formula

      Vi(Me)₂SiO-(Si(Me)₂O)₉₈-(Si(Me)O_{3/2})₂-Si(Me)₃
(B) Organohydrogenpolysiloxane:
   (B-1) linear organohydrogenpolysiloxane represented by the following average formula

      (Me)₃SiO-(Si(Me)₂0)₆₃-(Si(H)(Me)O)₂₀-Si(Me)₃
   (B-2) linear organohydrogenpolysiloxane represented by the following average formula

      H(Me)₂SiO-(Si(Me)₂O)₁₈-Si(H)(Me)₂
(C) Aerobic platinum catalyst mixture:
   aerobic platinum catalyst mixture (C-1) prepared above
(D) Dehydrating agent:
   (D-1) ethyl 2-(trimethylsilyl)propionate (ECMS) (an α-silyl ester)
   (D') tetra(isopropyl) titanate (TPT) or tetraisopropoxy zirconium(IV) (Zr(O-Pr)₄) was added as a catalyst for promoting reaction of component (D) with water
(E) Addition reaction inhibitor:
   (E-1) 0.31 wt% toluene solution of tris(di-tert-butylphenyl) phosphite represented by the following formula

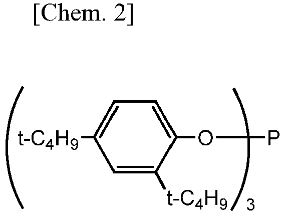

The curable liquid silicone compositions prepared as above were evaluated for one-pack storage stability in closed state, curability in room temperature/air opening after storage (RT cure), and hardness of cured product by the following procedures.

The one-pack storage stability in closed state was evaluated as follows. After the curable liquid silicone composition was filled in a glass bottle in nitrogen atmosphere and the bottle is sealed, specifically, 10 g of the composition shown in Table 2 was filled in a glass bottle of outer dimensions diameter 35 mm and height 65 mm in nitrogen atmosphere, a lid (lid consisting of a hat-shaped plug of polyethylene (PE) which was a portion in contact with the bottle inlet and a metal cap which was a portion to be pressed, namely PE plug + metal cap) was engaged with or pressure inserted into the inlet (or opening) of the glass bottle, yielding a sealed container (corresponding to the first sealing structure, referred to as glass bottle, hereinafter). The glass bottle was allowed to stand in ambient air at room temperature, during which a thickening or gelling behavior of the curable liquid silicone composition was observed. The thickening or gelling behavior of the curable liquid silicone composition was examined by tilting the bottle and observing how the composition flowed following the tilt of the bottle. When the flow was poorer than immediately after sealing, the curable liquid silicone composition was judged thickened or gelled. Also, the glass bottle filled with the curable liquid silicone composition was observed at a point of time of 5 minutes after standing in air at room temperature and thereafter every day. In this way, the time (days) passed until the curable liquid silicone composition thickened or gelled was determined.

The RT cure was evaluated as follows. The curable liquid silicone composition stored in the glass bottle for one day in the sealed state was taken out into another container (4 mm deep) in nitrogen atmosphere and exposed to an air/room temperature environment. The time passed until the composition cured into rubber or gel was evaluated as cure time. The cured state in the deep section was confirmed by inserting a needle into the composition in the container.

The hardness of the cured product was evaluated as follows. Immediately after preparation, the curable liquid silicone composition was cast into a glass dish and exposed to an air/room temperature environment for 24 hours. Of the cured products thus obtained, the rubber cured product was measured for hardness (Durometer Type A) according to JIS K 6249 and the gel cured product was measured for penetration (consistency using 1/4 cone according to JIS K 2220) according to JIS K 6249.

The results are shown in Table 2.

**[Table 2]**

| | | | Composition | | | |
|---|---|---|---|---|---|---|
| | | | S-1 | S-2 | S-3 | S-4 |
| | (A) | (A-1) | 25 | | | |
| | | (A-2) | | 25 | | |
| | | (A-3) | | | 25 | 25 |
| | (B) | (B-1) | 1.0 | 0.3 | | |
| | | (B-2) | | | 8 | 8 |
| | (C) | (C-1) | 0.05 | 0.05 | 0.05 | 0.05 |
| Component (g) | Amount of Pt based on total of (A) and (B), ppm | | 8 | 8 | 8 | 8 |
| | (D) | (D-1) | 0.25 | 0.25 | 0.25 | 0.25 |
| | (D') | TPT | 0.03 | 0.03 | 0.03 | |
| | | Zr(O-Pr)₄ | | | | 0.03 |
| | (E) | (E-1) | 0.14 | 0.14 | 0.14 | 0.14 |
| | | Molar ratio of (E) to Pt | 0.5 | 0.5 | 0.5 | 0.5 |
| Results of evaluation | Cured product appearance | | orange transparent | orange transparent | orange transparent | colorless transparent |
| | One-pack storage stability (closed state/RT) | | 50 days | 50 days | 40 days | 65 days |
| | RT cure (open) | | 45 min. | 90 min. | 60 min. | 60 min. |
| | Hardness | | 21 (Durometer Type A) | 53 **(penetration)** | 51 (penetration) | 50 **(penetration)** |

### (Preparation of storage container)

A closed container (referred to as glass bottle, hereinafter) was prepared as the first sealing structure by filling a glass bottle (of outer dimensions: diameter 35 mm and height 65 mm) with 10 g of the composition shown in Table 2 in nitrogen, and engaging or pressure inserting a lid (lid consisting of a hat-shaped plug of PE (outer diameter 28 mm) which was a portion in contact with the bottle inlet and a metal cap which was a portion to be pressed, namely PE plug + metal cap) into the inlet (opening, inner diameter 23 mm) of the glass bottle. Next, a storage container was prepared according to the combination shown in Table 3. The composition in the storage container was evaluated for storage stability.

### (Example 1)

The glass bottle prepared above was enclosed in a bag of PE film (PE bag, thickness 110 µm), and one pack of dehydrating/deoxygenating agent (RP system RP-1AN by Mitsubishi Gas Chemical Co., Ltd.) as the member having a function of consuming and removing oxygen and water was placed near the lid of the glass bottle. Thereafter, the opening of the PE bag was sealed by heat fusion to sealably enclose the glass bottle and the dehydrating/deoxygenating agent, completing the storage container. The sealed PE bag is the second sealing structure. This storage container corresponds to the package 30 in FIG. 3, wherein the glass bottle is the container main body 31, the PE bag is the sealing film 32, and the dehydrating/deoxygenating agent is the member 33.

### (Example 2)

The storage container was prepared as in Example 1 except that a bag of a PE film (thickness 90 µm) laminated on the outer surface with aluminum foil (thickness 10 µm), that is, aluminum-laminated PE bag of thickness 100 µm was used instead of the PE bag. This storage container corresponds to the package 30 in FIG. 3, wherein the glass bottle is the container main body 31, the aluminum-laminated PE bag is the sealing film 32, and the dehydrating/deoxygenating agent is the member 33.

### (Comparative Example 1)

The glass bottle as such was the storage container.

### (Comparative Example 2)

The storage container was prepared as in Example 1 except that the dehydrating/deoxygenating agent was not attached.

### (Comparative Example 3)

The storage container was prepared as in Example 1 except that one pack of dehydrating agent having only a dehydrating function (Ageless Dry ADN-5 by Mitsubishi Gas Chemical Co., Ltd.) was used instead of the dehydrating/deoxygenating agent.

### (Comparative Example 4)

The storage container was prepared as in Example 1 except that one pack of deoxygenating agent having only a deoxygenating function (Ageless FJ by Mitsubishi Gas Chemical Co., Ltd.) was used instead of the dehydrating/deoxygenating agent.

### (Comparative Example 5)

The storage container was prepared as in Example 2 except that the dehydrating/deoxygenating agent was not attached.

Also, a closed container (referred to as cartridge container, hereinafter) was prepared as the first sealing structure by filling a metal (aluminum) cartridge main body container (of outer dimensions: diameter 47 mm and height 215 mm) with 250 g of the composition shown in Table 2 in nitrogen, and inserting a lid (plunger of aluminum with outer diameter 46 mm) into the inlet (opening, inner diameter 46 mm) of the cartridge. Next, a storage container was prepared according to the combination shown in Table 3. The composition in the storage container was evaluated for storage stability.

### (Example 3)

One pack of dehydrating/deoxygenating agent (RP system RP-1AN by Mitsubishi Gas Chemical Co., Ltd.) was placed on the plunger of the cartridge container prepared above. A sealing film of PE was bonded to the opening end of the cartridge main body container (having the plunger received therein) with an adhesive. That is, the container was closed such that the opening (inlet) of the cartridge main body container might be covered with the lid, yielding a storage container. The PE film bonded is the second sealing structure. This storage container corresponds to the cartridge 20 in FIG. 2, wherein the cartridge main body container is the container main body 21a, the plunger is the plunger 21b, the PE film is the sealing film 22, and the dehydrating/deoxygenating agent is the member 23.

### (Comparative Example 6)

The cartridge container as such was the storage container.

### (Comparative Example 7)

The storage container was prepared as in Example 3 except that the dehydrating/deoxygenating agent was not attached.

**[Table 3]**

| | Storage container | | |
|---|---|---|---|
| | 1st sealing structure | 2nd sealing structure | Member having function of consuming and removing oxygen and water |
| Example 1 | glass bottle | PE bag (sealed by heat fusion) | dehydrating/deoxygenating agent (RP system RP-1AN) |
| Comparative Example 1 | glass bottle | nil | nil |
| Comparative Example 2 | glass bottle | PE bag (sealed by heat fusion) | nil |
| Comparative Example 3 | glass bottle | PE bag (sealed by heat fusion) | dehydrating agent (Ageless Dry ADN-5) |
| Comparative Example 4 | glass bottle | PE bag (sealed by heat fusion) | deoxygenating agent (Ageless FJ) |
| Example 2 | glass bottle | Al-laminated PE bag (sealed by heat fusion) | dehydrating/deoxygenating agent (RP system RP-1AN) |
| Comparative Example 5 | glass bottle | Al-laminated PE bag (sealed by heat fusion) | nil |
| Example 3 | cartridge container | PE film (sealed by heat fusion) | dehydrating/deoxygenating agent (RP system RP-1AN) |
| Comparative Example 6 | cartridge container | nil | nil |
| Comparative Example 7 | cartridge container | PE film (sealed by heat fusion) | nil |

The storage containers prepared above were evaluated for storage stability as follows.

The conditions for evaluating storage stability included holding the storage container in a thermostat tank at temperature 40°C and humidity 10-50% RH (without humidity conditioning). By observing the state of the composition in the storage container, the duration within which the composition remained liquid was determined. That is, the thickening or gelling behavior of the curable liquid silicone composition was examined by tilting the container main body (glass bottle or cartridge container) and observing how the composition flowed following the tilt. When the flow was poorer than immediately after sealing, the curable liquid silicone composition was judged thickened or gelled. Also, the storage container filled with the curable liquid silicone composition was observed every 7 days after placement in a thermostat tank of the storage container filled with the curable liquid silicone composition. In this way, the time (days) passed until the curable liquid silicone composition thickened or gelled was determined. In the embodiment (Examples 1 and 2 and Comparative Examples 2 and 3) wherein the glass bottle is sealed with the second sealing structure (PE bag or Al-laminated PE bag) or the embodiment (Example 3 and Comparative Examples 6 and 7) wherein the container main body is a metal cartridge main body, since the interior state (liquid or gelled) could not be judged, the storage stability was sequentially evaluated by furnishing a plurality of samples and opening the seal every 7 days.

The results of evaluation of storage stability (storage stability or duration of remaining liquid at 40°C) of compositions (S-1) to (S-4), which were sealably contained in the storage containers prepared above, are tabulated in Table 4.

The storage container of the invention ensures that the addition-curable liquid silicone composition is stored over a long period of 42 days or more. Even after storage, the platinum catalyst mixture is activated upon contact with air in no-heating open conditions (RT in air) whereupon addition reaction takes place. It is demonstrated that the composition cures into a rubber or gel.

**[Table 4]**

| Liquid maintaining duration | Composition | | | |
|---|---|---|---|---|
| | S-1 | S-2 | S-3 | S-4 |
| Example 1 | 49 days | 49 days | 42 days | 49 days |
| Comparative Example 1 | 7 days | 7 days | 7 days | 7 days |
| Comparative Example 2 | 14 days | 14 days | 7 days | 14 days |
| Comparative Example 3 | 14 days | 14 days | 7 days | 14 days |
| Comparative Example 4 | 21 days | 21 days | 14 days | 21 days |
| Example 2 | 84 days or more | 84 days or more | 84 days or more | 84 days or more |
| Comparative Example 5 | 21 days | 21 days | 14 days | 21 days |
| Example 3 | 56 days | 56 days | 49 days | 63 days |
| Comparative Example 6 | less than 7 days | less than 7 days | less than 7 days | less than 7 days |
| Comparative Example 7 | 14 days | 14 days | 7 days | 14 days |

### REFERENCE SIGNS LIST

- 1: addition-curable liquid silicone composition
- 10: tank
- 11a, 21a, 31, 41: container main body
- 11b: lid
- 11h: opening
- 12, 22, 32, 42: sealing film
- 13, 23, 33, 43: member
- 20: cartridge
- 21b: plunger
- 21n: nozzle
- 30,40: package
- 32a: bag-shaped sealing film having an opening
- 32s, 41s, 42s: sealing section

## Claims

1. A container for storing an addition-curable liquid silicone composition comprising a platinum catalyst which remains inactive in an atmosphere having a humidity of up to 5% RH and an oxygen concentration of up to 0.1% by volume, but is activated upon contact with air, the composition being adapted to crosslink and cure through hydrosilation addition reaction in the presence of the platinum catalyst which has been activated in air,
the container having an inlet through which the composition is injected so that the composition is sealably contained in the container, the container comprising
a first sealing structure having a sealing section constructed by sealing the inlet,
a second sealing structure in the form of a film which covers at least the entire sealing section of the first sealing structure or the entire first sealing structure to further seal the sealing section, and
a member having a function of consuming and removing oxygen and water, disposed between the first and second sealing structures.

2. The container of claim 1 wherein the addition-curable liquid silicone composition comprises components (A) to (C):
(A) a diorganopolysiloxane having at least one alkenyl group per molecule,
(B) an organohydrogenpolysiloxane having at least two silicon-bonded hydrogen atoms per molecule, in an amount to provide 0.5 to 4 moles of silicon-bonded hydrogen in component (B) per mole of alkenyl group in component (A), and
(C) a platinum catalyst mixture which is activated with oxygen and/or water, in an amount to provide 0.1 to 1,000 ppm by weight of platinum atom in component (C) based on the total weight of components (A) and (B).

3. The container of claim 2 wherein the platinum catalyst mixture is an aerobic platinum catalyst mixture in the form of a reaction mixture of a platinum/alkenyl-containing organosiloxane complex and an organosilicon compound having at least one silicon-bonded hydrogen atom (SiH group) per molecule, in an amount to provide a molar excess of SiH group relative to the alkenyl group in the platinum/alkenyl-containing organosiloxane complex.

4. The container of claim 3 wherein the platinum/alkenyl-containing organosiloxane complex is a complex of platinum, platinum chloride, chloroplatinic acid or chloroplatinic acid salt with a vinyl-containing siloxane.

5. The container of claim 4 wherein the vinyl-containing siloxane is 1,3-divinyl-1,1,3,3-tetramethyldisiloxane.

6. The container of claim 3 wherein the organosilicon compound having at least one silicon-bonded hydrogen atom is an organohydrogensilane or organohydrogensiloxane oligomer.

7. The container of claim 3 wherein the organosilicon compound having at least one silicon-bonded hydrogen atom is at least one compound selected from among a trialkoxy(hydrogen)silane, alkyldialkoxy(hydrogen)silane, dialkylalkoxy(hydrogen)silane, 1,1,1,3,3-pentamethyldisiloxane, 1,1,3,3-tetramethyldisiloxane, 1,1,1,3,5,5,5-heptamethyltrisiloxane, 1,1,3,3,5,5-hexamethyltrisiloxane, 1,1,1,3,5,7,7,7-octamethyltetrasiloxane, 1,3,5,7-tetramethylcyclotetrasiloxane, and 1,3,5,7,9-pentamethylcyclopentasiloxane.

8. The container of claim 3 wherein the organosilicon compound having at least one silicon-bonded hydrogen atom is an organohydrogensiloxane oligomer having at least two hydrogen atoms bonded to silicon atoms which adjoin each other via an oxygen atom to form a siloxane linkage (Si-O-Si), i.e., at least two SiH groups per molecule.

9. The container of claim 1 wherein the first sealing structure is a container made of a metal, glass, ceramic or resin, and the sealing section is constructed by inserting, engaging or screwing a lid made of a metal, glass, ceramic or resin into the inlet through which the composition is injected or by bonding or fusing the inlet itself to close the inlet.

10. The container of claim 1 wherein the second sealing structure is made of a resin film.

11. The container of claim 1 wherein the second sealing structure is a multilayered film composed of a resin layer and a metal layer or a multilayered film composed of a metal foil and a metal layer.

12. The container of claim 1 wherein the second sealing structure which covers at least the entire sealing section of the first sealing structure is heat fused or bonded to the first sealing structure disposed at the outer periphery of the sealing section to further seal the sealing section.

13. The container of claim 1 wherein the second sealing structure which covers the entire first sealing structure is itself closed by heat fusion or bonding to further seal the sealing section.

14. The container of claim 1 wherein the member having a function of consuming and removing oxygen and water is a dehydrating/deoxygenating agent or a mixture of a dehydrating agent and a deoxygenating agent.

15. The container of claim 1 wherein the member having a function of consuming and removing oxygen and water is disposed in the space between the first and second sealing structures.

16. The container of claim 1 wherein the member having a function of consuming and removing oxygen and water is rested on the sealing section of the first sealing structure.

17. The container of claim 1 wherein the member's function of consuming and removing oxygen and water is to chemically react with oxygen and water in the space where the member is present to absorb oxygen and water.
